# DEMANDE DE BREVET EUROPEEN

(11) **EP 4 446 126 A1**
(43) Date de publication de la demande: **16.10.2024**
(21) Numéro de dépôt: 24169221.9
(22) Date de dépôt: 09.04.2024
(51) Int. Cl.: B60B 27/00, B60B 27/02, B60B 27/04, F16D 41/24

(54) **MOYEU ARRIÈRE À ROUE LIBRE POUR CYCLE**

(30) Priorité: 11.04.2023 FR 2303566
(71) Demandeur: Alpin Components, 74370 Annecy (FR)
(72) Inventeur: Bérenger, Alexandre, 74370 Annecy (FR)
(74) Mandataire: KATZAROV S.A.

(57) **Abrégé**

Le moyeu à roue libre (1) selon l'invention comprend un corps de moyeu (3) et un corps de roue libre (4) montés en libre rotation autour d'un axe de moyeu, par l'intermédiaire d'au moins un roulement à billes interne du corps du moyeu (3) et un roulement à billes interne du corps de roue libre (4), le corps de moyeu (3) étant relié cinématiquement au corps de roue libre (4) par un moyen de transmission, le moyen de transmission comprenant une première roue dentée et une seconde roue dentée solidaires en rotation respectivement au corps de moyeu (3) et au corps de roue libre (4), les deux roues dentées sont coniques, et montées flottantes le long de l'axe du moyeu, chacune des roues dentées étant énergisée par un moyen de précontrainte, les moyens de précontrainte étant localisés de part et d'autre des roues dentée, caractérisé en ce que les roues dentées sont localisées en périphérie des roulements à billes internes.

## Description

La présente invention concerne un moyeu arrière à roue libre pour cycle.

De manière générale, un moyeu arrière à roue libre comprend un axe fixé au cadre du vélo, autour duquel est emmanché, par l'intermédiaire de roulements à billes, un corps de moyeu qui est équipé de deux flasques sur lesquelles sont fixés les rayons de la jante, et un corps de roue libre sur lequel est fixé une cassette munie de pignons reliés aux pédales par une chaine. Le corps de moyeu et le corps de roue libre sont reliés par un système de roue libre.

La rotation des pédales entraine la rotation du corps de roue libre, qui engraine le corps de moyeu par le système de roue libre. Le corps de moyeu étant solidaire de la jante, la rotation des pédales entraîne la mise en mouvement du vélo.

La robustesse du moyeu, l'efficacité et la fiabilité de la transmission du couple des pédales au corps de moyeu sont des problématiques primordiales à des compétiteurs qui sollicite grandement leur cycle, et recherche la performance.

Ces problématiques sont également importantes avec le développement croissant des motorisations des vélos électriques qui développent des couples additionnels importants.

La présente invention propose un moyeu à roue libre comprenant deux roues dentées coniques et flottantes, permettant d'augmenter sa robustesse, son efficacité et sa fiabilité.

Le moyeu à roue libre selon l'invention comprend un corps de moyeu et un corps de roue libre montés en libre rotation autour d'un axe de moyeu, par l'intermédiaire d'au moins un roulement à billes interne du corps du moyeu et un roulement à billes interne du corps de roue libre, le corps de moyeu étant relié cinématiquement au corps de roue libre par un moyen de transmission, le moyen de transmission comprenant une première roue dentée et une seconde roue dentée solidaires en rotation respectivement au corps de moyeu et au corps de roue libre, les deux roues dentées sont coniques, et montées flottantes le long de l'axe du moyeu, chacune des roues à roues dentée étant énergisée par un moyen de précontrainte, les moyens de précontrainte étant localisés de part et d'autre des roues dentée caractérisé en ce que les roues dentées sont localisées en périphérie des roulements à billes internes.

Selon une caractéristique complémentaire, la première roue dentée est enchâssée dans le corps de moyeu, et en ce que la seconde roue dentée est emmanchée autour du corps de roue libre.

Selon la caractéristique précédente, le corps de roue libre comprend un dégagement circulaire extérieure délimité par la portion de paroi circulaire de son extrémité distale et d'un épaulement circulaire, la seconde roue dentée et le moyen de précontrainte correspondant venant se loger dans le dégagement circulaire extérieure.

Précisons que le corps de moyeu comprend un premier dégagement circulaire dans lequel vient se loger la première roue dentée et le moyen de précontrainte correspondant.

Selon un mode de réalisation, un moyen de précontrainte est une pluralité de ressorts hélicoïdaux agencée sur la périphérie d'une roue dentée.

Selon la caractéristique précédente, l'épaulement circulaire comprend des seconds orifices borgnes.

Précisons que le premier dégagement circulaire comprend des premiers orifices borgnes.

Selon un autre mode de réalisation, un moyen de précontrainte est une rondelle élastique ondulée.

Selon le mode de réalisation précédent, la rondelle élastique est enchâssée dans un dégagement intérieur agencé dans le corps de moyeu.

Selon le mode de réalisation précédent, la rondelle élastique est emmanchée autour de la partie distale du corps de roue libre.

Précisons également que le corps de moyeu comprend à son extrémité distale une seconde gorge intérieure, le corps de roue libre comprenant à son extrémité distale une quatrième gorge intérieure, les gorges venant emmancher les roulements à billes internes.

Selon une caractéristique supplémentaire, les roues dentées comprennent une denture latérale munie de dents, une dent comprenant une arête saillante faisant un angle compris entre 5 et 20° avec une génératrice de la face conique passant par la base proximale de la dent.

La mise en oeuvre de l'invention sera mieux comprise à l'aide de la description détaillée qui est exposée ci-après en regard des dessins annexés dans lesquels :

Les figures 1 à 10 illustrent un moyeu arrière à roue libre selon un mode de réalisation de l'invention.
[Fig 1] est une vue en perspective.
[Fig 2] est une vue en coupe de la figure 1 selon un plan axial P.
[Fig 3] est une vue en grossissement de la figure 2.
[Fig 4] est une vue en perspective d'une roue dentée du corps de roue libre.
[Fig 5] est une vue en élévation d'une roue dentée du corps de moyeu.
[Fig 6] est une vue en élévation des roues dentées assemblées des figures 4 et 5.
[Fig 7] est une vue en perspective de la figure 6.
[Fig 8] est une vue de la figure 7 illustrant les roues dentées énergisées chacune par trois ressorts hélicoïdaux.
[Fig 9] est une vue en coupe en grossissement de la figure 1 selon un plan transversal T.
[Fig 10] est une vue en perspective éclatée de la figure 1.
Les figures 11 à 14 illustrent un moyeu arrière à roue libre selon un autre mode de réalisation.

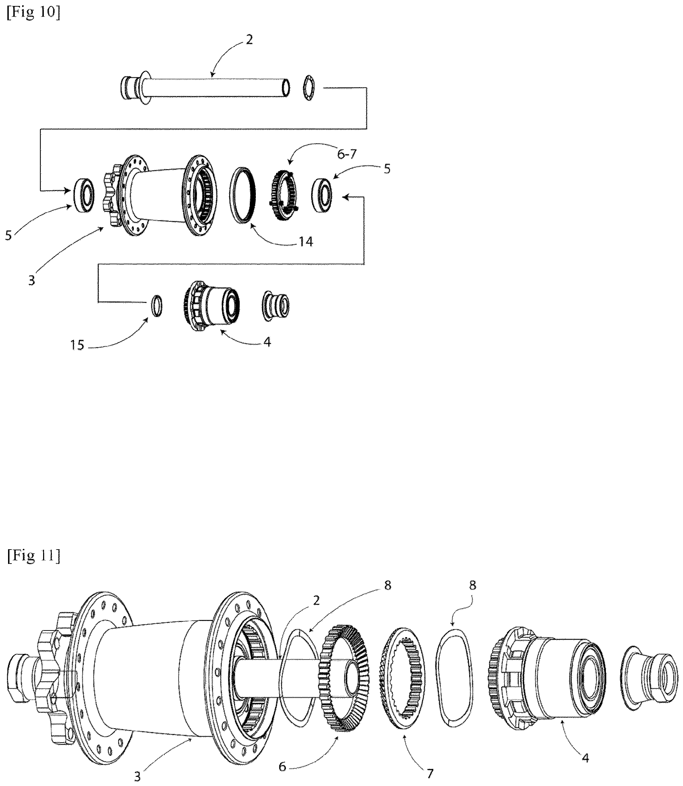

[Fig. 11] est une vue en perspective éclatée.

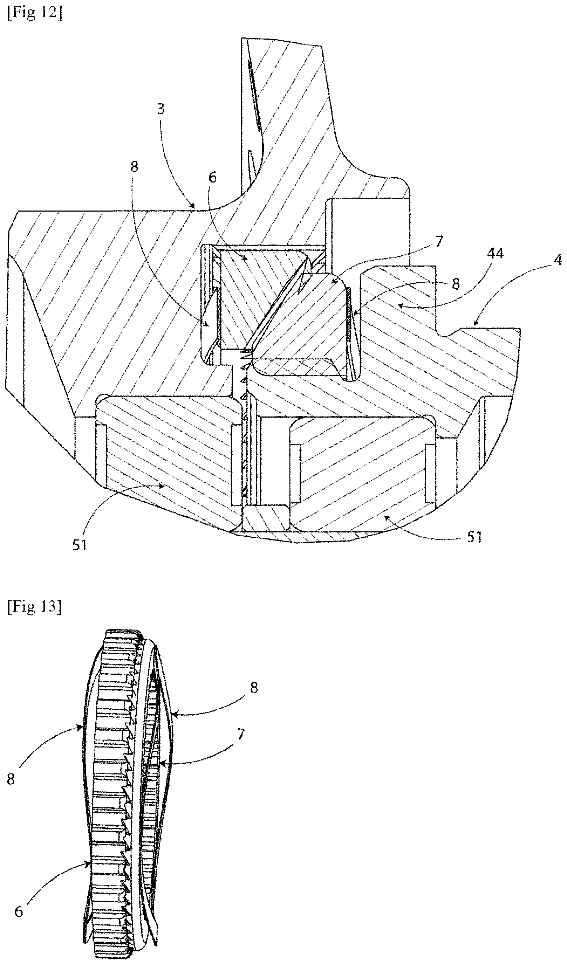

[Fig 12] est une vue en grossissement en coupe selon un plan axial P, les roues dentées étant engagées l'une contre l'autre.
[Fig 13] est une vue en perspective illustrant les roues dentées énergisées chacune par une rondelle élastique ondulée.

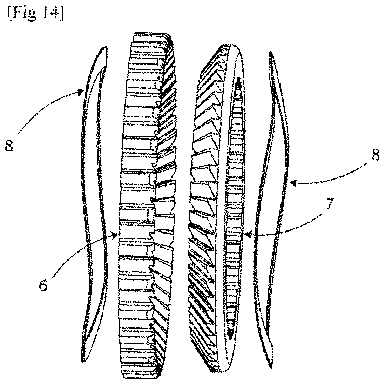

[Fig 14] est une vue en perspective illustrant les roues dentées désengagées.

De manière conventionnelle, le moyeu (1) arrière à roue libre selon l'invention comprend un axe de moyeu (2) autour duquel sont emmanchés un corps de moyeu (3) et un corps de roue libre (4), tous deux assujettis à l'axe du moyeu (2) par une paire de roulement à billes (5).

L'extrémité distale du corps de roue libre (4) est enchâssée dans l'extrémité distale du corps de moyeu (3), par l'intermédiaire d'un joint en V (14).

Il est entendu par une extrémité proximale une extrémité en direction d'une des extrémités de l'axe de moyeu (2), et une extrémité distale par une extrémité en direction du centre du moyeu (1), tout du moins dans une direction opposée à une des extrémités de l'axe du moyeu (2).

Le moyeu (1) à roue libre selon l'invention comprend un moyen de transmission du corps de roue libre (4) au corps de moyeu (3).

Le moyen de transmission comprend une première roue dentée (6) du corps de moyeu (3) et une seconde roue dentée (7) du corps de roue libre (4), ainsi qu'au moins un moyen de précontrainte (8) des roues dentées (6, 7) l'une avec l'autre.

Il est entendu par un moyen de précontrainte (8), un moyen de maintien en position d'engagement sous contraintes des roues dentées (6, 7), plus précisément en position précontrainte l'une contre l'autre.

Selon le mode de réalisation illustré, le moyen de transmission comprend un premier et un second moyen de précontrainte (8) disposés en opposition de part et d'autre des côtés extérieurs des roues dentées (6, 7).

Le moyen de transmission peut ainsi adopter une position engagée dans laquelle le corps de roue libre (4) entraîne en rotation le corps de moyeu (3), et une position désengagée dans laquelle, le corps de roue libre (4) est statique, tandis que le corps de moyeu (3) continue sa course en rotation.

Il est entendu par une roue dentée (6, 7), une roue à rochet communément appelées "ratchet" en langue anglaise, à savoir une roue dentée sur sa périphérie extérieure ou intérieure et également dentée sur un de ses flans latérales.

Il est également entendu qu'une roue dentée (6, 7) d'une roue libre est un disque percé en son centre, à savoir un anneau circulaire, pour l'enchâssement d'au moins l'axe du moyeu (2).

Tel qu'introduit précédemment, on qualifiera dans la suite de la description, la roue dentée du corps de moyeu en tant que première roue dentée (6), et la roue dentée du corps de roue libre en tant que seconde roue dentée (7).

Les roues dentées (6, 7) comprennent une denture de corps et une denture de roue libre.

Les dentures de corps sont localisées radialement et les dentures de roue libre sont localisées latéralement sur un des flans des roues dentées (6, 7).

Une denture de corps est une denture pour l'assujettissement au corps de moyeu (3) ou au corps de roue libre (4), pour respectivement la première roue dentée (6) ou la seconde roue dentée (7).

On qualifiera dans la suite de la description la denture de corps de moyeu (3) de la première roue dentée (6), en tant que première denture radiale (9), et la denture de corps de roue libre (4) de la seconde roue dentée (7), en tant que seconde denture radiale (10).

On qualifiera également une denture radiale (9, 10) extérieure pour une denture sur la circonférence extérieure d'une roue dentée (6, 7), et une denture radiale (9, 10) intérieure pour une denture sur la circonférence intérieure d'une roue dentée (6, 7).

La première roue dentée (6) est solidaire en rotation du corps de moyeu (3), et la seconde roue dentée (7) est solidaire en rotation du corps de roue libre (4), tout en étant mobiles en translation le long de l'axe du moyeu (2).

Les roues dentées (6, 7) tournent à la même vitesse que les corps (3, 4) auxquels elles sont solidarisées.

A cet effet, le corps de moyeu (3) comprend une troisième denture destinée à être engagée avec la première denture radiale (9), et le corps de roue libre (4) comprend une quatrième denture destinée à être engagée avec la seconde denture radiale (10).

La troisième denture ainsi que la quatrième denture, ont une orientation d'engagement parallèles à l'axe du moyeu (2), pour permettre la translation des roues dentées (6, 7) le long de l'axe du moyeu (2).

Selon une caractéristique complémentaire, les longueurs selon l'axe du moyeu (2) de la troisième denture et de la quatrième denture sont respectivement supérieures à celles de la première denture radiale (9) et de la seconde denture radiale (10).

Selon la caractéristique précédente, les deux roues dentées (6, 7) ont un degré de liberté axial, permettant leur translation respective selon l'axe du moyeu (2), lors des phases d'engagement et de désengagement.

Les dentures de roue libre respective des deux roues dentées (6, 7) sont destinées à s'engager et à se désengager les unes avec les autres lors du fonctionnement conventionnel de la roue libre sous la sollicitation permanente du moyen de précontrainte (8).

Dans la suite de la description, on qualifiera la denture de roue libre de la première roue dentée (6), en tant que première denture latérale (11), et la denture de roue libre de la seconde roue dentée (7), en tant que seconde denture latérale (12).

Il est entendu que les dentures latérales (11, 12) sont asymétriques, de telle manière à engager les roues dentées (6, 7) dans un sens de rotation et à désengager ces dernières dans l'autre sens de rotation, telles que décrites plus en détails dans la suite de la description.

Selon un premier aspect de l'invention, les deux roues dentées (6, 7) sont coniques et flottantes le long de l'axe du moyeu (2).

Il est entendu que les roues dentées (6, 7) coniques sont complémentaires l'une avec l'autre en tant que moyen de transmission du corps de moyeu (3) et du corps de roue libre (4).

Il est entendu par flottant, une roue dentée (6, 7) mobile le long de l'axe du moyeu (2), à savoir que les deux roues dentées (6, 7) sont mobiles en rapprochement et en écartement l'une avec l'autre, par translation axiale le long de l'axe du moyeu (2).

Chaque roue dentée (6, 7) parcourt ainsi sensiblement la moitié de la course à réaliser pour réaliser l'engagement des dentures latérales (11, 12).

Ajoutons également que lors de chocs ou de couples élevés, le moyeu (1) peut littéralement subir un effet de rotulage au niveau du moyen de transmission, à savoir un débattement angulaire de l'axe des roues dentées (6, 7) par rapport à l'axe du moyeu (2).

Deux roues dentées (6, 7) flottantes permettent un certain degré de liberté du moyen de transmission lors de débattement angulaire, permettant un rattrapage de jeu, réduisant les risques de désengagement du moyen de transmission.

Notons que l'association de deux roues dentées (6, 7) coniques et flottantes, permet lors d'un effet de rotulage du moyen de transmission, de non seulement avoir une liberté de mouvement angulaire, tout en gardant un engagement axial des dentures latérales (11, 12) coniques, limitant les risques de débrayage, tels qu'explicité plus en détail dans la suite de la description.

Avec des roues dentées (6, 7) coniques, plus la charge est élevée plus les dentures latérales (11, 12) sont engagées, à savoir que la géométrie conique des roues dentées (6, 7) combinée à la géométrie particulière des dentures latérales (11, 12), donne un caractère engageant des deux roues dentées (6, 7) mobiles l'une avec l'autre selon la charge appliquée.

Avec deux roues dentées (6, 7) mobiles, si l'une vient à se bloquer, la seconde peut prendre le relais et réaliser l'engagement.

En outre, avec deux roues dentées (6, 7) flottantes, la course des moyens de précontraintes (8) est diminué, augmentant leur durée de vie et leur réactivité, ainsi que diminuant la vitesse d'impact des roues dentées (6, 7) l'une contre l'autre lors de la phase de débrayage, diminuant le bruit résultant caractéristique d'une roue libre.

En outre, des roues dentées (6, 7) flottantes dans un moyeu à roue libre (1) permettent leur changement facilité, tant lors de leur dégradation éventuelle que pour leur remplacement par une autre roue dentée (6, 7) ayant un nombre de dents (13) des dentures latérales (11, 12) supérieur ou inférieur.

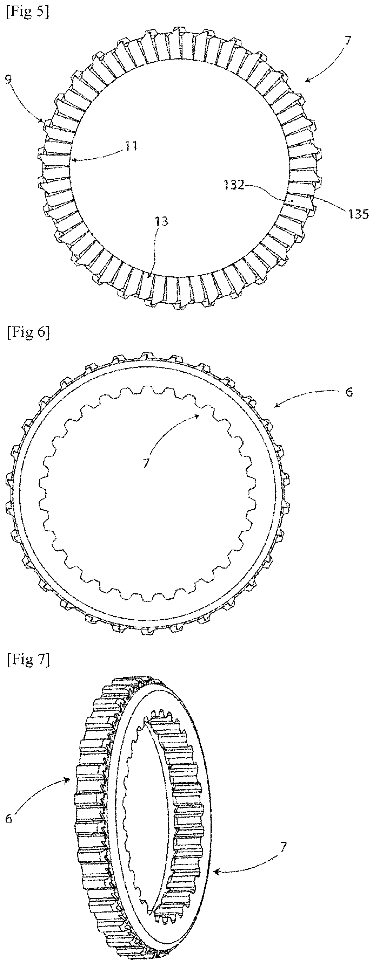

Tel qu'illustré à la figure 6, la première roue dentée (6) comprend la première denture radiale (9) constituée par la circonférence extérieure à dentelure droite parallèle à l'axe du moyeu (2), la première denture latérale (11) constituée par une circonférence intérieure à face conique, et une face proximale droite, à savoir agencée perpendiculairement à l'axe du moyeu (2), destinée à venir au contact permanent du premier moyen de précontrainte (8).

Il est entendu par une face conique la face d'une roue dentée (6, 7) conique, dont la génératrice fait un angle aigu avec l'axe du moyeu (2).

L'angle aigu est défini par une génératrice de la face conique avec l'axe du moyeu (2) qui est compris entre 10 et 45°, de préférence compris entre 25 et 35°.

Cet angle prononcé de guidage axiale des roues dentées (6, 7), évite lors de l'utilisation, un désalignement entre les deux roues dentées (6, 7) dans le plan des dentures latérales (11, 12), qui limite voire évite les risques de débrayages lors des reprises de pédalage.

Précisons que selon le mode de réalisation illustré, la face conique de la première roue dentée (6) est dirigée vers la partie proximale du corps de moyeu (3), à savoir que la face conique fait saillie en direction distale.

En d'autres termes, la face conique de la première roue dentée (6) est en dépression par rapport à son profil général.

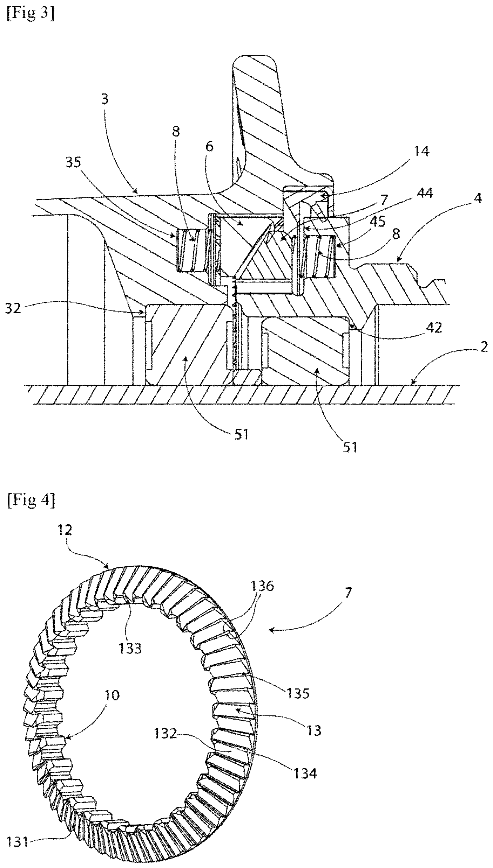

Tel qu'illustré à la figure 4, la seconde roue dentée (7) comprend la seconde denture radiale (10) constituée par la circonférence intérieure à dentelure droite parallèle à l'axe du moyeu (2), la seconde denture latérale (12) constituée par la face distale conique, et une face proximale droite destinée à venir au contact permanent du second moyen de précontrainte (8).

Précisons que la face distale conique de la seconde roue dentée (7) est orientée vers la partie proximale du corps de roue libre, à savoir que la face distale conique fait saillie en direction distale.

En d'autres termes, la face conique de la seconde roue dentée (7) est en saillie par rapport à son profil général.

Selon une caractéristique, le profil général d'une dent (13) d'une denture latérale (11, 12) n'est pas orienté selon une génératrice de la face conique.

Selon la caractéristique précédente, une dent (13) d'une denture latérale (11, 12) comprend au moins une arête saillante (136) qui fait un angle compris entre 5 et 20°, de préférence entre 5 et 10°, avec une génératrice de la face conique passant par la base proximale de la dent (13).

Il est entendu par une génératrice de la face conique, une droite passant par le centre d'une roue dentée (6, 7) et sécante à l'une des périphéries intérieure ou extérieure de la roue dentée (6, 7).

Une dent (13) d'une denture latérale (11, 12) comprend une face d'engagement (131), une face de désengagement (132), une face interne (133) et une face externe (134) voire une face saillante (135).

Précisons qu'une dent (13) comprend une arête saillante (136) délimitant la face d'engagement (131) et la face de désengagement (132) ou comprend deux arêtes saillantes (136) délimitant la face saillante (135) bordée par la face d'engagement (131) et la face de désengagement (132).

Ajoutons que l'arête saillante (136) est rectiligne.

La face d'engagement (131) fait un angle aigu avec la face conique de la roue dentée (6, 7) sur laquelle la dent fait saillie.

L'angle aigu entre la face d'engagement (131) et la face conique de la roue dentée (6, 7) compris entre 5 et 15°, de préférence compris entre 10 et 12°, plus exactement 11°.

L'angle aigu de la face d'engagement (131) permet lors de la mise en charge, de facilité l'engrainement des roues dentées (6, 7) en position d'engagement.

La face de désengagement (132) fait un angle aigu avec la base de la dent (13).

Selon une caractéristique complémentaire, le nombre de dents latérale (13) est comprise entre 18 et 100, de préférence comprise entre 40 et 100, plus préférentiellement compris entre 50 et 80.

De manière très avantageuse, cette structure et orientation particulière d'une dent (13) d'une denture latérale (11, 12) sont obtenues sur une machine de fraisage à trois axes sans avoir de phase de reprise d'usinage. Toutes les étapes de fabrication d'une roue dentée (6, 7) selon l'invention sont ainsi réalisées avec une unique machine de fabrication.

Cette structure particulière permet ainsi de produire une roue dentée (6, 7) conique sur une machine de fraisage simple et économique comme les roues dentées plates de l'art antérieur.

Cette structure particulière selon l'invention permet d'obtenir un coût réduit par rapport à une roue dentée conique mobile ayant des dents latérales orientées radialement ou hélicoïdales sur les moyeux à roue libre à une roue dentée fixe.

En effet, une roue dentée conique, ayant des dents latérales orientées radialement, nécessite des reprises d'usinage lors de sa production par une machine de fraisage à trois axes, ou requière d'être produite par des machines à cinq axes afin de pouvoir être taillée selon la définition théorique.

Cette structure selon l'invention, permet donc de pouvoir proposer sur un marché très concurrentiel, le moyeu à roue libre (1) selon l'invention à un prix avantageux et à un coût très compétitif malgré sa structure complexe. Ce qui ne semblait pas être viable jusqu'à présent, de produire deux roues dentées coniques mobiles dans un moyeu à roue libre.

Tel qu'illustré aux figures 6 et 7, en position engagée, les deux roues dentées (6, 7) s'imbriquent l'une avec l'autre, leur face conique respective au contact de l'une de l'autre, la seconde roue dentée (7) étant quasiment intégrée à la première roue dentée.

Cet emboitage des roues dentées (6, 7) réduit considérablement l'encombrement axial de la roue libre du moyeu à roue libre (1) selon l'invention.

Il a été évalué, une réduction de l'encombrement d'environ 38 pourcents par rapport à deux roues dentées plates conventionnelles.

Notons que chacune des roues dentées (6, 7) est énergisée par un moyen de précontrainte (8) axiale, à savoir parallèle à l'axe du moyeu (2).

Le moyeu à roue libre (1) comprend ainsi un premier moyen de précontrainte (8) du corps de moyeu (3) à l'encontre de la première roue dentée (6), et un second moyen de précontrainte (8) du corps de roue libre (4) à l'encontre de la seconde roue dentée (7).

Un moyen de précontrainte (8) est un moyen élastique ou un moyen de répulsion magnétique, permettant en permanence d'engager les roues dentées (6, 7) l'une avec l'autre, lors de la mise en rotation du corps de roue libre (4).

Il est entendu par un engagement permanent des roues dentées (6, 7) par les moyens de précontrainte (8), en position de débrayage, les roues dentées (6, 7) glissant l'une sur l'autre, voir réalisant des sauts l'une contre l'autre au passage des arêtes saillantes (136) des dents latérales (13), telles qu'introduites plus en détails dans la suite de la description.

Un moyen de précontrainte (8) est par exemple une rondelle élastique ondulée, un ressort hélicoïdal, ou une pluralité de ressorts hélicoïdaux, une lame, des aimants, des matériaux synthétiques résilients tels qu'une mousse synthétique ou un caoutchouc, de préférence une rondelle élastique ondulée.

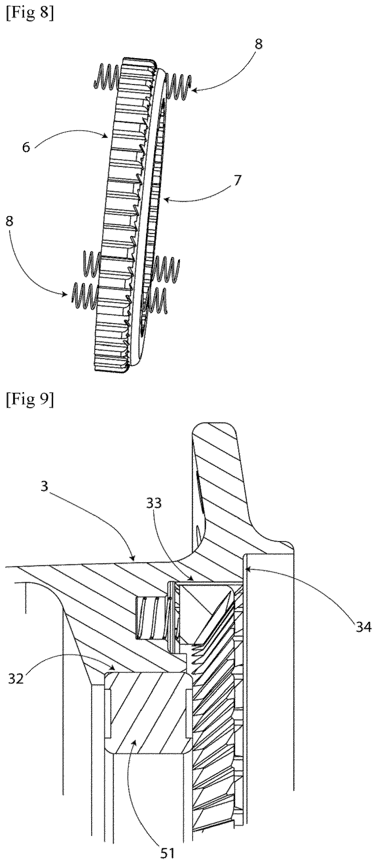

Selon le mode de réalisation illustré à la figure 8, les moyens de précontrainte (8), à savoir le premier moyen de précontrainte (8) et le second moyen de précontrainte (8), sont une pluralité de ressorts hélicoïdaux régulièrement répartis sur les périphéries latérales respectives des faces proximales des roues dentées (6, 7).

Selon le mode de réalisation précédent, trois ressorts hélicoïdaux sont régulièrement répartis sur la périphérie latérale de chacune des roues dentées (6, 7).

Cette pluralité de ressorts hélicoïdaux en tant que moyen de précontrainte (8), permet une poussée équilibrée, qui permet d'équilibrer l'axe de poussée sur l'ensemble des roues dentées (6, 7) comparativement à deux unique ressorts hélicoïdaux disposés chacun en opposition de part et d'autre des roues dentées (6, 7).

Ajoutons qu'une pluralité de ressorts hélicoïdaux de petits diamètres permet de maintenir un meilleur contact entre les deux roues dentées (6, 7) même sous des effets de rotulage, en comparaison avec un ressort de plus grand diamètre.

Ainsi, avec un seul ressort de grand diamètre, il est plus difficile de bien maîtriser l'effort appliqué contre une roue dentée et favoriser ainsi le désaxage de la roue dentée.

Avec une pluralité de ressorts de plus petits diamètres, les efforts appliqués sont beaucoup plus constants et ces ressorts travaillent parfaitement dans la plage d'effort demandé.

Selon le mode de réalisation illustré aux figures 11 à 14, les moyens de précontrainte (8), à savoir le premier moyen de précontrainte (8) et le second moyen de précontrainte (8), sont chacun une rondelle élastique ondulée.

Selon le mode de réalisation précédent, une rondelle élastique ondulée est une rondelle ondulée en acier ressort, plus précisément une rondelle ondulée en acier à haute teneur en carbone, voire en acier inoxydable.

Précisons que chacun des moyens de précontrainte (8) fonctionnent de manière opposée, de telles manière à repousser en permanence chacune des roues dentées (6, 7) l'une en direction de l'autre.

Précisons également que les deux roues dentées (6, 7) sont mobiles en rapprochement par l'effet ressort ou de répulsion magnétique des moyens de précontrainte (8) lors de l'actionnement du corps de roue libre (4) dans le sens anti-horaire.

Les deux roues dentées (6, 7) sont mobiles en écartement, par le désengagement du moyen de transmission, par l'arrêt de la rotation du corps de roue libre (4), le corps du moyeu (3) continuant sa rotation horaire, les dentures latérales restant en contact, un bruit caractéristique de roue libre se fait entendre.

A cet effet, la distance d'engagement des deux roues dentées (6, 7) mobile est moindre par rapport à un système comprenant une unique roue dentée mobile et une roue dentée fixe solidarisée au corps de roue libre ou au corps du moyen, engendrant une meilleure réactivité et efficacité du moyeu à roue libre selon l'invention.

Un avantage supplémentaire d'employer deux roues dentées (6, 7) mobiles en translation est la réduction du bruit caractéristique d'une roue libre, par rapport à un moyeu à roue libre comprenant uniquement une unique roue dentée libre.

Afin d'augmenter la rigidité du moyeu et sa performance, l'écartement des roulements à billes externes (52) doit être augmenté au maximum. En effet, la rigidité torsionnelle autour d'un axe horizontal compris dans le plan médian des deux roulements du corps du moyeu est augmentée plus les roulements à billes (5) internes sont éloignés. Cette problématique est au coeur de toutes les attentions.

Un second aspect de l'invention en synergie avec le premier aspect, est d'optimiser les performances du moyeu à roue libre (1) par la réduction de l'écartement des roulements à billes internes (51) du corps du moyeu (3) et du corps de roue libre (4), disposés en correspondance, à l'interface de la jonction du corps de moyeu (3) et du corps de roue libre (4).

Le corps de moyeu (3) et le corps de roue libre (4) comprennent chacun une paire de roulement à billes (5), chaque roulement à billes (5) étant disposé à une extrémité ou sensiblement à l'extrémité du corps dans lequel il est enchâssé.

Le moyeu (1) à roue libre comprend ainsi deux roulements à bille interne (51), à savoir un roulement à billes interne (51) du corps de roue libre (4) et un roulement à billes interne (51) du corps du moyeu (3), ainsi qu'un roulement à billes externe (52) du corps de roue libre (4) et un roulement à billes externe (52) du corps du moyeu (3).

Précisons qu'une entretoise (15) est emmanchée autour de l'axe du moyeu (2) et disposée à l'interface des roulements à billes internes (51), afin de garantir l'écartement fonctionnel entre le corps du moyeu (3) et le corps de roue libre (4).

La largeur du profilé de l'entretoise (15) étant comprise entre 0,5 et 15 millimètres.

A cet effet, selon une caractéristique supplémentaire, le moyen de transmission est localisé en périphérie des roulements à billes internes (51).

Plus précisément le moyen de transmission est localisé en périphérie du roulement à billes internes (51) du corps du moyeu (3) et du roulement à billes interne (51) du corps de roue libre (4), afin d'optimiser leur vicinité l'un avec l'autre.

Selon la caractéristique précédente, les deux roues dentées (6, 7) ont un diamètre compris entre 25 et 65 millimètres.

En outre, un grand diamètre d'une roue dentée (6, 7) tend à abaisser l'effort tangentiel induit par le couple de la première roue dentée (6) et du corps du moyen (3).

Cette dernière caractéristique permet également de réduire le niveau de contrainte dans la première denture radiale (10), favorisant la durabilité du corps du moyeu (3) face à l'usure et la fatigue mécanique.

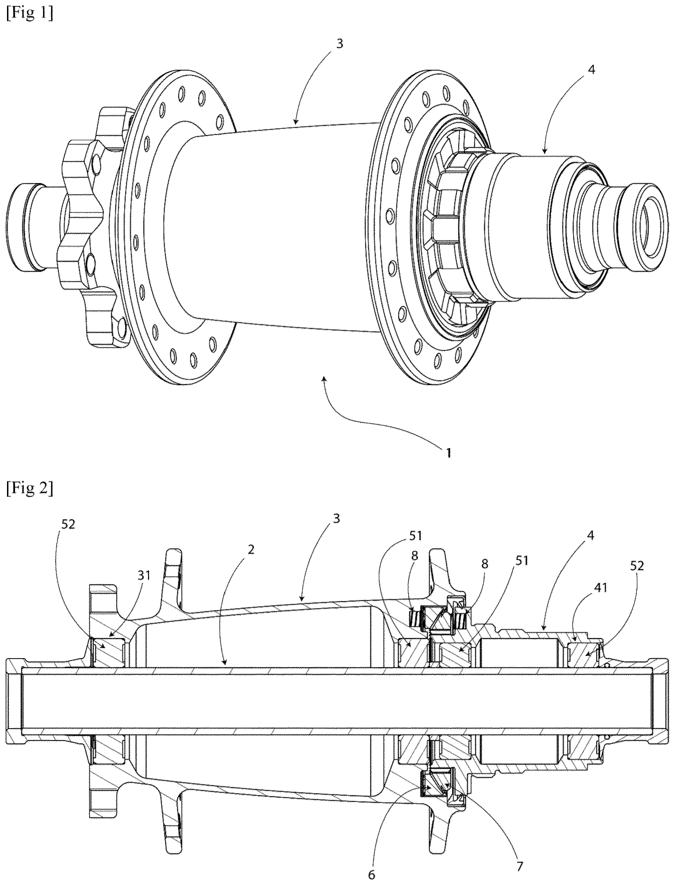

En référence aux figures 2 et 3, le corps de moyeu (3) comprend à son extrémité proximale, une première gorge intérieure (31) dans laquelle vient s'enchâsser le roulement à billes externe (52), et comprend à son extrémité distale une seconde gorge intérieure (32) dans laquelle vient s'enchâsser le roulement à billes interne (51), un premier dégagement circulaire (33) dans lequel vient s'enchâsser la première roue dentée (6), ainsi qu'un second dégagement circulaire (34) dans lequel vient s'enchâsser le joint en V (14).

Il est entendu par un joint en V (14), un joint circulaire en élastomère comprenant une lèvre circonférentielle, communément appelé "V-ring rubber seal" en langue anglaise.

Précisons que le premier dégagement circulaire (33) et le second dégagement circulaire (34) sont localisés dans la circonférence intérieure du corps de moyeu (3).

Notons que le premier dégagement circulaire (33) comprend dans sa circonférence intérieure la troisième denture destinée à être engagée avec la première denture radiale (9) de la première roue dentée (6).

Ajoutons que selon une caractéristique supplémentaire, la circonférence du premier dégagement circulaire (33) est supérieure à celle de la seconde gorge intérieure (32), et qu'au moins une partie du premier dégagement circulaire (33) est à l'aplomb de la seconde gorge intérieure (32).

Selon la caractéristique précédente, la première roue dentée (7) est localisée en périphérie du roulement à billes interne (51) du corps de moyeu (3).

Selon le mode de réalisation illustré aux figures 1 à 10, le premier dégagement circulaire (33) comprend également des premiers orifices borgnes (35) dans lesquels sont enchâsser les moyens de précontraintes (8) de la première roue dentée (6).

Selon le mode de réalisation illustré à la figure 3, le premier dégagement circulaire (33) comprend trois premiers orifices borgnes (35) régulièrement répartis sur sa circonférence, dans chacun desquels est enchâssé un ressort hélicoïdal.

Selon un mode d'exécution, non représenté, le premier dégagement circulaire (33) comprend un dégagement intérieur dans lequel est enchâssé un ressort hélicoïdal réalisant la circonférence intérieure du corps du moyeu (3).

Selon le mode de réalisation illustré aux figures 11 à 14, le premier dégagement circulaire (33) comprend un dégagement intérieur dans lequel est enchâssé une rondelle élastique ondulée.

Le corps de roue libre (4) comprend à son extrémité proximale, une troisième gorge intérieure (41) dans laquelle est enchâssé le roulement à billes externe (52), et comprend à son extrémité distale une quatrième gorge intérieure (42) agencée dans sa circonférence intérieure, dans laquelle est enchâssé le roulement à bille interne (51).

Le corps de roue libre (4) comprend également à son extrémité distale, un dégagement circulaire extérieure (43) autour duquel est emmanchée la seconde roue dentée (7).

Précisons que la seconde roue dentée (7) est emmanchée autour de l'extrémité distale du corps de roue libre (4).

Le dégagement circulaire extérieure (43) est délimité par la portion de paroi circulaire de l'extrémité distale du corps de roue libre (4) et d'un épaulement circulaire (44).

L'épaulement circulaire (44) et le second dégagement circulaire (34) viennent enserrer de part et d'autre le joint en V (14).

Selon une caractéristique complémentaire, l'épaulement circulaire (44) comprend des seconds orifices borgnes (45) dans lesquels sont enchâsser les moyens de précontraintes (8) de la seconde roue dentée (7).

Selon le mode de réalisation illustré aux figures 2, 3 et 9, l'épaulement circulaire (44) comprend trois second orifices borgnes (45) dans lesquels sont enchâssés des ressorts hélicoïdaux.

Selon un mode d'exécution, non représenté, l'épaulement circulaire (44) comprend un dégagement dans lequel est enchâssé un ressort hélicoïdal réalisant la circonférence extérieure du corps de roue libre (4).

Selon le mode de réalisation illustré aux figures 11 à 14, et plus particulièrement illustré à la figure 12, la rondelle élastique est emmanchée autour de la partie distale du corps de roue libre (4) en butée contre l'épaulement circulaire (44).

Précisons que la circonférence extérieure du dégagement circulaire extérieure (43) comprend la quatrième denture radiale engagée avec la seconde denture radiale (12) de la seconde roue dentée (7).

Précisons également que le dégagement circulaire extérieure (43) est localisé en périphérie de la quatrième gorge intérieure (42), de telle manière à ce que la seconde roue dentée (7) soit agencée en périphérie du roulement à billes interne (52) du corps de roue libre (4).

Précisons que l'extrémité distale du corps de roue libre (4), à savoir l'extrémité distale de la quatrième gorge intérieure (42), enchâssée dans la seconde roue dentée (7) est à fleur de la base proximale de la seconde denture latérale (12), afin que le roulement à bille interne (51) du corps de roue libre (4) soit le plus proche du centre du moyeu à roue libre (1).

Précisons également que l'extrémité distale de la seconde gorge intérieure (32) est logée dans la première roue dentée (6) en regard de la seconde roue dentée (7), de telle manière à ce que le roulement à billes interne (51) du corps de moyeu (3) soit le plus proche du centre du moyeu à roue libre (1).

Les roulements à billes internes (51) étant au plus proche l'un de l'autre, les roulements à billes internes (51) sont plus écartés des roulements à billes externes (52) que ceux de l'art antérieur, augmentant la rigidité torsionnelle autour d'un axe horizontal compris dans le plan médian des deux roulements du corps du moyeu.

## Revendications

1. Moyeu à roue libre (1) pour cycle, comprenant un corps de moyeu (3) et un corps de roue libre (4) montés en libre rotation autour d'un axe de moyeu (2), par l'intermédiaire d'au moins un roulement à billes interne (51) du corps du moyeu (3) et un roulement à billes interne (51) du corps de roue libre (4), le corps de moyeu (3) étant relié cinématiquement au corps de roue libre (4) par un moyen de transmission, le moyen de transmission comprenant une première roue dentée (6) et une seconde roue dentée (7) solidaires en rotation respectivement au corps de moyeu (3) et au corps de roue libre (4), **caractérisé en ce que** les deux roues dentées (6, 7) sont coniques, et montées flottantes le long de l'axe du moyeu (2), chacune des roues à roues dentée (6, 7) étant énergisée par un moyen de précontrainte (8), les moyens de précontrainte (8) étant localisés de part et d'autre des roues dentée (6, 7), **caractérisé en ce que** les roues dentées (6, 7) sont localisées en périphérie des roulements à billes internes (51).

2. Moyeu à roue libre (1) selon la revendication 1, **caractérisé en ce que** la première roue dentée (6) est enchâssée dans le corps de moyeu (3), et **en ce que** la seconde roue dentée (7) est emmanchée autour du corps de roue libre (4).

3. Moyeu à roue libre (1) selon la revendication précédente, **caractérisé en ce que** le corps de roue libre (3) comprend un dégagement circulaire extérieure (43) délimité par la portion de paroi circulaire de son extrémité distale et d'un épaulement circulaire (44), la seconde roue dentée (7) et le moyen de précontrainte (8) correspondant venant se loger dans le dégagement circulaire extérieure (43).

4. Moyeu à roue libre (1) selon la revendication 2 ou 3, **caractérisé en ce que** le corps de moyeu (3) comprend un premier dégagement circulaire (33) dans lequel vient se loger la première roue dentée (7) et le moyen de précontrainte (8) correspondant.

5. Moyeu à roue libre (1) selon l'une quelconque des revendications précédentes, **caractérisé en ce qu'**un moyen de précontrainte (8) est une pluralité de ressorts hélicoïdaux agencée sur la périphérie d'une roue dentée (6, 7).

6. Moyeu à roue libre (1) selon l'une quelconque des revendications 5 à 7, **caractérisé en ce que** l'épaulement circulaire (44) comprend des seconds orifices borgnes (45).

7. Moyeu à roue libre (1) selon l'une quelconque des revendications 4 à 6, **caractérisé en ce que** le premier dégagement circulaire (33) comprend des premiers orifices borgnes (35).

8. Moyeu à roue libre (1) selon l'une quelconque des revendications 1 à 4, **caractérisé en ce qu'**un moyen de précontrainte (8) est une rondelle élastique ondulée.

9. Moyeu à roue libre (1) selon la revendication précédente, **caractérisé en ce que** la rondelle élastique est enchâssé dans un dégagement intérieur agencé dans le corps de moyeu (3).

10. Moyeu à roue libre (1) selon la revendication 8 ou 9, **caractérisé en ce que** la rondelle élastique est emmanchée autour de la partie distale du corps de roue libre (4).

11. Moyeu à roue libre (1) selon l'une quelconque des revendications 2 à 10, **caractérisé en ce que** le corps de moyeu (3) comprend à son extrémité distale une seconde gorge intérieure (32), le corps de roue libre (4) comprenant à son extrémité distale une quatrième gorge intérieure (42), les gorges (32, 42) venant emmancher les roulements à billes internes (51).

12. Moyeu à roue libre (1) selon l'une quelconque des revendications précédentes, **caractérisé en ce que** les roues dentées (6, 7) comprennent une denture latérale (11, 12) munie de dents (13), une dent (13) comprenant une arête saillante (136) faisant un angle compris entre 5 et 20° avec une génératrice de la face conique passant par la base proximale de la dent (13).
